(19) Europäisches Patentamt
European Patent Office
Office européen des brevets

(11) **EP 3 523 140 B1**

(12) **FASCICULE DE BREVET EUROPEEN**

(45) Date de publication et mention de la délivrance du brevet:
**19.05.2021 Bulletin 2021/20**

(21) Numéro de dépôt: **17786979.9**

(22) Date de dépôt: **05.10.2017**

(51) Int Cl.:
*B60C 1/00* *(2006.01)*     *B60C 11/03* *(2006.01)*
*B60C 11/00* *(2006.01)*     *B60C 11/13* *(2006.01)*

(86) Numéro de dépôt international:
**PCT/FR2017/052733**

(87) Numéro de publication internationale:
**WO 2018/065732 (12.04.2018 Gazette 2018/15)**

(54) **BANDE DE ROULEMENT DE PNEUMATIQUE POUR VEHICULE LOURD DE TYPE GENIE CIVIL**

REIFENLAUFFLÄCHE FÜR EIN SCHWERES BAUFAHRZEUG

TYRE TREAD FOR A HEAVY CIVIL-ENGINEERING VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2016 FR 1659672**

(43) Date de publication de la demande:
**14.08.2019 Bulletin 2019/33**

(73) Titulaire: **Compagnie Générale des Etablissements Michelin**
**63000 Clermont-Ferrand (FR)**

(72) Inventeurs:
• **SPINNLER, Olivier**
**63040 Clermont-Ferrand Cedex 9 (FR)**
• **CLADIERE, Julien**
**63040 Clermont-Ferrand Cedex 9 (FR)**

(74) Mandataire: **Millanvois, Patrick Jacques Jean**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 834 813**     **EP-A1- 1 914 092**
**WO-A1-2013/014253**

**Description**

La présente invention concerne un pneumatique radial, destiné à équiper un véhicule lourd de type génie civil et, plus particulièrement, la bande roulement d'un tel pneumatique.

Un pneumatique radial pour véhicule lourd de type génie civil est destiné à être monté sur une jante dont le diamètre nominal, au sens de la norme ETRTO (European Tyre and Rim Technical Organisation), est au moins égal à 25 pouces. Bien que non limitée à ce type d'application, l'invention est plus particulièrement décrite en référence à un pneumatique radial de grande dimension, destiné, par exemple, à être monté sur un dumper, véhicule de transport de matériaux extraits de carrières ou de mines de surface. Par pneumatique radial de grande dimension, on entend un pneumatique destiné à être monté sur une jante dont le diamètre nominal est au moins égal à 49 pouces et peut atteindre 57 pouces, voire 63 pouces.

Un tel pneumatique est divulgué dans WO 2013014253 A.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions «radialement intérieur », respectivement « radialement extérieur» signifient «plus proche », respectivement « plus éloigné de l'axe de rotation du pneumatique». Par «axialement intérieur », respectivement « axialement extérieur», on entend «plus proche », respectivement « plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend radialement de l'extérieur vers l'intérieur une bande de roulement, une armature de sommet et une armature de carcasse. L'ensemble constitué par la bande de roulement et l'armature de sommet est le sommet du pneumatique.

La bande de roulement est la partie du pneumatique destinée à entrer en contact avec un sol par l'intermédiaire d'une surface de roulement et à être usée.

La bande de roulement comprend un système plus ou moins complexe de découpures séparant des éléments en relief, appelé sculpture, pour assurer notamment une performance satisfaisante en adhérence.

Les découpures de la bande de roulement peuvent avoir tout type d'orientation par rapport à la direction circonférentielle du pneumatique. On distingue usuellement les découpures longitudinales ou circonférentielles formant, avec la direction circonférentielle, un angle au plus égal à 45°, et les découpures axiales ou transversales formant, avec la direction circonférentielle, un angle au moins égal à 45°. Parmi les découpures, on distingue les rainures et les incisions. Une rainure est une découpure définissant un espace délimité par des parois de matière en regard et distantes l'une de l'autre, de telle sorte que lesdites parois ne peuvent pas venir en contact l'une avec l'autre lors du passage de la bande de roulement dans le contact avec le sol, lorsque le pneumatique est en roulage sous des conditions de charge et de pression nominales recommandées. Une incision est une découpure définissant un espace délimité par des parois de matière venant en contact l'une avec l'autre lors du roulage.

La bande de roulement est généralement caractérisée géométriquement par une largeur axiale $W_T$ et une épaisseur radiale $H_T$. La largeur axiale $W_T$ est définie comme la largeur axiale de la surface de contact de la bande de roulement du pneumatique neuf avec un sol lisse, le pneumatique étant soumis à des conditions de pression et de charge telles que recommandées, par exemple, par la norme E.T.R.T.O. (European Tyre and Rim Technical Organization). L'épaisseur radiale $H_T$ est définie, par convention, comme la profondeur radiale maximale mesurée dans les découpures. Dans le cas d'un pneumatique pour véhicule lourd de type génie civil, et à titre d'exemple, la largeur axiale $W_T$ est au moins égale à 600 mm et l'épaisseur radiale $H_T$ est au moins égale à 60 mm.

La bande de roulement est également souvent caractérisée par un taux d'entaillement volumique TEV, égal au rapport entre le volume total $V_D$ des découpures, mesuré sur le pneumatique libre c'est-à-dire non monté et non gonflé, et la somme du volume total $V_D$ des découpures et du volume total $V_R$ des éléments en relief délimités par ces découpures. La somme $V_D+V_R$ correspond au volume compris radialement entre la surface de roulement et une surface de fond, translatée de la surface de roulement radialement vers l'intérieur d'une distance radiale égale à l'épaisseur radiale $H_T$ de la bande de roulement. Ce taux d'entaillement volumique TEV, exprimé en %, conditionne en particulier la performance en usure, par le volume de gomme à user disponible, et la performance en adhérence longitudinale et transversale, par la présence d'arêtes respectivement transversales et longitudinales et de découpures ayant la capacité de stocker ou d'évacuer l'eau ou la boue.

Dans la présente invention, on appelle découpures efficaces, des découpures dont la largeur $W_D$ est au plus égale à 20% de leur profondeur radiale $H_D$ et dont la profondeur radiale $H_D$ est au moins égale à 50% de l'épaisseur radiale $H_T$ de la bande de roulement. Ce sont des découpures de type rainures, permettant une circulation d'air dans la bande de roulement, et non des incisions.

Ces découpures efficaces, ayant une longueur cumulée $L_D$, mesurée sur une surface radialement extérieure de la bande roulement, permettent de définir un taux de lamellisation surfacique TL, exprimé en m/m², égal au rapport entre la longueur cumulée $L_D$ des découpures efficaces et l'aire A de la surface radialement extérieure de la bande de roulement égale à $2\Pi R_E^* W_T$, où $R_E$ est le rayon extérieur du pneumatique.

La bande de roulement d'un pneumatique comprend en outre au moins un mélange élastomérique, c'est-à-dire un matériau élastomérique obtenu par mélangeage de ses divers constituants. Un mélange élastomérique comprend classiquement une matrice élastomérique comprenant au moins un élastomère diénique de type caoutchouc naturel ou synthétique, au moins une charge renforçante de type noir de carbone et/ou de type silice, un système de réticulation le plus souvent à base de soufre, et des agents de protection.

Un mélange élastomérique peut être caractérisé mécaniquement, en particulier après cuisson, par ses propriétés dynamiques, telles qu'un module de cisaillement dynamique $G^* = (G'^2 + G''^2)^{1/2}$, où G' est le module de cisaillement élastique et G" le module de cisaillement visqueux, et une perte dynamique $tg\delta = G''/G'$. Le module de cisaillement dynamique $G^*$ et la perte dynamique $tg\delta$ sont mesurés sur un viscoanalyseur de type Metravib VA4000, selon la norme ASTM D 5992-96. On enregistre la réponse d'un échantillon de mélange élastomérique vulcanisé, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 45% (cycle aller), puis de 45% à 0,1% (cycle retour), et à une température de 100°C. Ces propriétés dynamiques sont ainsi mesurées pour une fréquence égale à 10 Hz, une déformation égale à 50% de l'amplitude de déformation crête-crête et une température égale à 100°C.

Un mélange élastomérique peut être en outre caractérisé vis-à-vis de sa tenue à la fissuration, par un test de fatigue. La résistance à la fatigue $N_R$, exprimée en nombre de cycles ou en unité relative (pourcentage d'un nombre de cycles par rapport à un nombre de cycles de référence), est mesurée sur 12 éprouvettes soumises à des tractions répétées de faible fréquence jusqu'à un allongement de 40%, à une température de 23°C, à l'aide d'un appareil Monsanto (type « MFTR ») jusqu'à rupture de l'éprouvette, en appliquant le protocole décrit dans la norme ASTM D4482-85 et ISO 6943 à des éprouvettes rectangulaires (65 mm de longueur utile, 1.5 mm d'épaisseur, 15 mm de largeur) présentant une entaille centrale de 3mm. Avec des résultats exprimés en unité relative, une valeur supérieure à celle d'un témoin pris en référence, arbitrairement fixée à 100, indique un résultat amélioré c'est-à-dire une meilleure résistance à la fatigue des échantillons de mélange élastomérique. Corrélativement, une valeur inférieure à 100 indique un résultat dégradé c'est-à-dire une moins bonne résistance à la fatigue des échantillons de mélange élastomérique.

Il est connu que la tenue à la fissuration d'un mélange élastomérique dépend en particulier de l'homogénéité du mélangeage de ses constituants, en particulier de la matrice élastomérique et de la charge renforçante. Un critère connu d'homogénéité est la dispersion de la charge renforçante dans la matrice élastomérique.

La dispersion de charge renforçante dans une matrice élastomérique est caractérisée de façon connue par une note de dispersion Z, qui est mesurée, après réticulation du mélange élastomérique, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge renforçante n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\% \text{ surface non dispersée}) / 0.35$$

Le pourcentage de surface non dispersée est, quant à lui, mesuré grâce à une caméra observant la surface de l'échantillon sous une lumière incidente à 30°. Les points clairs sont associés à de la charge renforçante et à des agglomérats, tandis que les points foncés sont associés à la matrice élastomérique; un traitement numérique transforme l'image en une image noir et blanche, et permet la détermination du pourcentage de surface non dispersée, telle que décrite par S.Otto dans le document précité.

Plus la note Z est élevée, meilleure est la dispersion de la charge renforçante dans la matrice élastomérique, une note Z égale à 100 correspondant à une dispersion parfaite et une note Z égale à 0 correspondant à une dispersion médiocre. On considérera qu'une note Z supérieure ou égale à 65 correspond à une bonne dispersion de la charge renforçante dans la matrice élastomérique.

L'usage d'un pneumatique pour véhicule lourd de type génie civil est caractérisé par un port de charges élevées et un roulage sur des pistes recouvertes de pierres de diverses tailles. Lors d'un roulage sous charge élevée sur des pistes recouvertes de pierres, qui vont indenter la bande de roulement, les indenteurs vont d'une part agresser la bande de roulement, d'autre part se coincer, le cas échéant, dans les découpures de la bande de roulement. Le coincement des pierres dans les découpures de la bande de roulement, appelé également rétention de pierres, est susceptible d'initier des fissures en fond de découpures qui vont se propager radialement vers l'intérieur du sommet du pneumatique pour atteindre l'armature de sommet, et plus précisément l'armature de protection la plus radialement extérieure, qui va se dégrader au cours du temps et se rompre : ce qui va réduire la durée de vie du pneumatique. Ce phénomène est d'autant plus marqué que les découpures de la bande de roulement sont nombreuses et/ou ont un volume important, c'est-à-dire que le taux d'entaillement volumique de la bande roulement est élevé, typiquement au moins égal à 12%, et que le taux de lamellisation surfacique est élevé, typiquement au moins égal à 3%.

Les inventeurs se sont donnés pour objectif de désensibiliser la bande de roulement d'un pneumatique pour véhicule lourd de type génie civil aux agressions par des indenteurs susceptibles de générer des fissurations en fond de découpure, en particulier dans le cas d'une bande de roulement à taux d'entaillement volumique et taux de lamellisation surfacique élevés.

Cet objectif a été atteint par un pneumatique pour véhicule lourd de type génie civil comprenant :

- une bande de roulement ayant une épaisseur radiale $H_T$ au moins égale à 60 mm et une largeur axiale $W_T$,
- la bande de roulement comprenant des découpures, ayant une largeur $W_D$ et une profondeur radiale $H_D$, et des éléments en relief, séparés les uns des autres par les découpures,
- les découpures, dont la largeur $W_D$ est au plus égale à 20% de leur profondeur radiale $H_D$ et dont la profondeur radiale $H_D$ est au moins égale à 50% de l'épaisseur radiale $H_T$ de la bande de roulement, dites découpures efficaces, ayant une longueur cumulée $L_D$, mesurée sur une surface radialement extérieure de la bande roulement,
- la bande de roulement ayant un taux de lamellisation surfacique TL, exprimé en m/m$^2$, égal au rapport entre la longueur cumulée $L_D$ des découpures efficaces et l'aire A de la surface radialement extérieure de la bande de roulement égale à $2\Pi R_E * W_T$, où $R_E$ est le rayon extérieur du pneumatique,
- la bande de roulement comprenant, au moins au niveau des fonds des découpures, un mélange élastomérique ayant une résistance à la rupture en fissuration définie par un nombre de cycles à rupture $N_R$,
- le taux de lamellisation surfacique TL de la bande de roulement étant au moins égal à 3 m/m$^2$,
- le nombre de cycles à rupture $N_R$ du mélange élastomérique de la bande de roulement étant au moins égal à 60000 cycles,
- et le ratio C, rapport entre le nombre de cycles à rupture $N_R$ du mélange élastomérique de la bande de roulement et le taux de lamellisation surfacique TL de la bande de roulement, étant au moins égal à 20000 cycles/(m/m$^2$).

Une première caractéristique essentielle de l'invention est d'avoir un taux de lamellisation surfacique TL de la bande de roulement au moins égal à 3 m/m$^2$. Un tel taux de lamellisation surfacique TL de la bande de roulement, c'est-à-dire une telle longueur cumulée $L_D$ minimale des découpures efficaces par unité de surface, entraîne un risque élevé de coincement de pierres dans les découpures efficaces. En contrepartie, il garantit une bonne adhérence du pneumatique, ainsi qu'une ventilation des découpures efficaces de la bande de roulement, donc un refroidissement de la bande de roulement et, par conséquent, une diminution des températures internes du sommet.

Une deuxième caractéristique essentielle de l'invention est d'avoir un nombre de cycles à rupture $N_R$ du mélange élastomérique de la bande de roulement au moins égal à 60000 cycles. Un tel nombre de cycles à rupture, caractéristique d'une vitesse de propagation des fissures modérée, garantit une tenue à la fissuration satisfaisante du mélange élastomérique, au moins positionné dans les fonds des découpures particulièrement exposés aux indenteurs présents sur le sol de roulage du pneumatique.

Les inventeurs ont enfin montré qu'un ratio C, rapport entre le nombre de cycles à rupture $N_R$ du mélange élastomérique de la bande de roulement et le taux de lamellisation surfacique TL de la bande de roulement, au moins égal à 20000 cycles/(m/m$^2$), combiné avec les deux caractéristiques de lamellisation de la bande de roulement et de tenue à la fissuration du mélange élastomérique, était un critère pertinent pour une bonne résistance de la bande roulement aux agressions par des indenteurs susceptibles de générer des fissurations en fond de découpures, dans le cas d'une bande de roulement très découpée, avec un taux d'entaillement volumique et un taux de lamellisation surfacique élevés.

Avantageusement le ratio C est au moins égal à 40000 cycles/ (m/m$^2$). Un tel ratio renforce encore la résistance aux agressions de la bande de roulement.

Avantageusement le taux de lamellisation TL de la bande de roulement est au moins égal à 3.5 m/m$^2$. Le risque de coincement de pierres dans les découpures est encore augmenté, mais l'adhérence est améliorée. Par ailleurs, la ventilation des découpures efficaces de la bande de roulement est améliorée par un taux de lamellisation TL plus élevé; ce qui entraîne une diminution du niveau thermique du sommet du pneumatique et, par conséquent, permet une meilleure productivité du transport de matériaux réalisé par des véhicules équipés de pneumatiques selon l'invention.

Encore avantageusement le taux de lamellisation TL de la bande de roulement est au plus égal à 9 m/m$^2$. Au-delà de ce taux de lamellisation TL, la longueur cumulée $L_D$ de découpure efficaces par unité de surface, par conséquent le nombre de découpures efficaces par unité de surface, risque de sensibiliser la bande de roulement aux agressions à un niveau inacceptable. D'une part, le nombre de zones d'initiation de fissures en fond de découpures devient trop important. D'autre part, du fait du grand nombre de découpures, les dimensions des éléments en relief diminuent et donc leurs rigidités diminuent, ce qui augmente le risque d'arrachement des éléments en relief.

Préférentiellement le nombre de cycles à rupture $N_R$ du mélange élastomérique de la bande de roulement est au moins égal à 120000 cycles. Un tel nombre de cycles à rupture renforce encore la résistance du mélange élastomérique aux agressions de la bande de roulement.

Il est avantageux que le mélange élastomérique de la bande de roulement ait un module de cisaillement dynamique $G^*$ au moins égal à 1.0 MPa. Une rigidité minimale du matériau garantit une résistance à l'usure du mélange élastomérique de la bande de roulement satisfaisante.

Il est également avantageux que le mélange élastomérique de la bande de roulement ait une perte dynamique tg$\delta$ au plus égal à 0.2. Une perte dynamique pas trop élevée permet de limiter le niveau thermique du sommet. Un tel niveau de perte thermique est plus particulièrement caractéristique des mélanges élastomériques dont la matrice élastomérique est constituée de caoutchouc naturel.

Selon un mode de réalisation préféré de sa composition, le mélange élastomérique de la bande de roulement comprend une matrice élastomérique constituée par un polyisoprène naturel. Comme vu précédemment, ce type de matériau permet en particulier de garantir des niveaux thermiques limités dans le sommet du pneumatique.

Le mélange élastomérique de la bande de roulement comprend préférentiellement une charge renforçante dont le taux est au moins égal à 25 pce (parties pour cent parties d'élastomère) et au plus égal à 80 pce. Cet intervalle de taux de charge renforçante permet de réaliser un bon compromis entre la résistance à l'usure et la résistance aux agressions.

Selon une première variante de composition, la charge renforçante du mélange élastomérique de la bande de roulement comprend un noir de carbone dont le taux est au moins égal à 25 pce et au plus égal à 60 pce. Le noir de carbone est, en effet, la charge renforçante la plus utilisée dans les mélanges élastomériques.

Selon une deuxième variante de composition, la charge renforçante du mélange élastomérique de la bande de roulement comprend une charge inorganique, de préférence une silice, dont le taux est au plus égal à 25 pce. Une charge inorganique classique est la silice.

La charge renforçante du mélange élastomérique de la bande de roulement ayant une note de dispersion $Z$, la note de dispersion $Z$ de la charge renforçante du mélange élastomérique de la bande de roulement est préférentiellement au moins égale à 65. Plus la note de dispersion $Z$ est élevée, plus la dispersion de la charge renforçante et homogène dans le mélange élastomérique : ce qui est favorable vis-à-vis de la résistance aux agressions.

Selon un mode de réalisation fréquent, la bande de roulement est constituée par un mélange élastomérique unique.

Avantageusement, l'ensemble des découpures ayant un volume total $V_D$ et l'ensemble des éléments en relief ayant un volume total $V_R$, la bande de roulement ayant un taux d'entaillement volumique TEV, exprimé en %, égal au rapport entre le volume total $V_D$ des découpures et la somme du volume total $V_D$ des découpures et du volume total des éléments en relief, le taux d'entaillement volumique TEV de la bande de roulement est au moins égal à 12%, de préférence au moins égal à 14%. Pour avoir une ventilation thermique efficace de la bande roulement, les découpures doivent à la fois être en nombre suffisant, ce qui se traduit par un taux de lamellisation TL minimal, et avoir un volume suffisant, ce qui se traduit par un taux d'entaillement volumique TEV minimal. En outre, un taux d'entaillement volumique TEV minimal est favorable à l'adhérence du pneumatique, en facilitant l'évacuation de l'eau et de la boue éventuellement présentes sur les pistes de roulage.

Les caractéristiques de l'invention seront mieux comprises à l'aide des figures 1 à 3, schématiques et non à l'échelle:

- figure 1: demi-coupe, dans un plan méridien, d'un sommet de pneumatique pour véhicule lourd de type génie civil, selon l'invention.
- figure 2A à 2C: variantes de réalisation d'une bande de roulement pour un pneumatique pour véhicule lourd de type génie civil, selon l'invention.
- figure 3: domaine des nombre de cycles à rupture $N_R$ du mélange élastomérique de bande roulement en fonction du taux de lamellisation surfacique TL de la bande de roulement pour un pneumatique pour véhicule lourd de type génie civil selon l'invention.

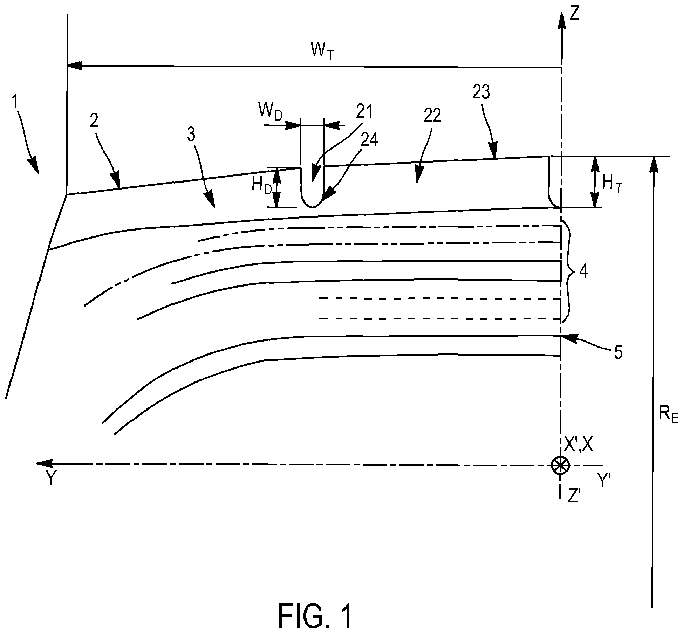

Sur la figure 1, est représentée une demi-coupe méridienne, dans un plan YZ du sommet d'un pneumatique 1 pour véhicule lourd de type génie civil comprenant une bande de roulement 2 et une armature de sommet 3, radialement intérieure à la bande de roulement 2. La bande de roulement 2, ayant une épaisseur radiale $H_T$ au moins égale à 60 mm, comprend des découpures 21, ayant une largeur $W_D$ et une profondeur radiale $H_D$, et des éléments en relief 22, séparés par les découpures 21. Les découpures 21, dont la largeur $W_D$ est au plus égale à 20% de leur profondeur radiale $H_D$, mesurée entre une surface radialement extérieure 23 de la bande roulement 2 et un fond de découpure 24, et dont la profondeur radiale $H_D$ est au moins égale à 50% de l'épaisseur radiale $H_T$, dites découpures efficaces, ont une longueur cumulée $L_D$ (non représentée sur la figure), mesurée sur la surface radialement extérieure 23 de la bande roulement 2. La bande de roulement 2 a un taux de lamellisation surfacique TL, exprimé en m/m², égal au rapport entre la longueur cumulée $L_D$ des découpures efficaces 21 et l'aire A de la surface radialement extérieure 23 de la bande de

roulement égale à $2\Pi R_E {*} W_T$ , où $R_E$ est le rayon extérieur du pneumatique mesuré dans le plan équatorial XZ, entre l'axe de révolution YY' et la surface radialement extérieure 23 de la bande de roulement 2 ou surface de roulement. Radialement à l'intérieur de la bande de roulement 2, l'armature de sommet 3 comprend, radialement de l'extérieur vers l'intérieur, une armature de protection constituée de deux couches de protection, une armature de travail constituée de deux couches de travail et une armature de frettage constituée de deux couches de frettage.

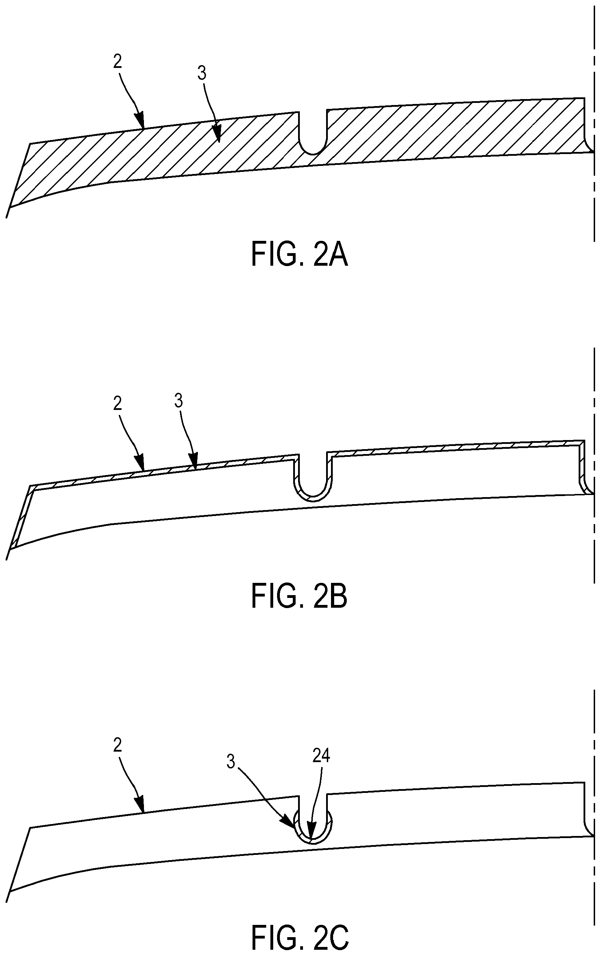

Les figures 2A à 2C représentent des variantes de réalisation d'une bande de roulement pour un pneumatique pour véhicule lourd de type génie civil, selon l'invention. Seule une demi-bande de roulement, dans un plan méridien, est représentée. La figure 2A représente une bande roulement 2 constituée par un mélange élastomérique 3 unique, résistant à la fissuration au sens de l'invention, c'est-à-dire caractérisé par un nombre de cycles à rupture $N_R$ au moins égal à 60000 cycles. La figure 2B représente une bande roulement 2 dont une portion radialement extérieure est constituée par un mélange élastomérique 3, résistant à la fissuration au sens de l'invention. Enfin la figure 2C représente le cas où le mélange élastomérique 3, résistant à la fissuration au sens de l'invention, est uniquement localisé en fond de découpure 24.

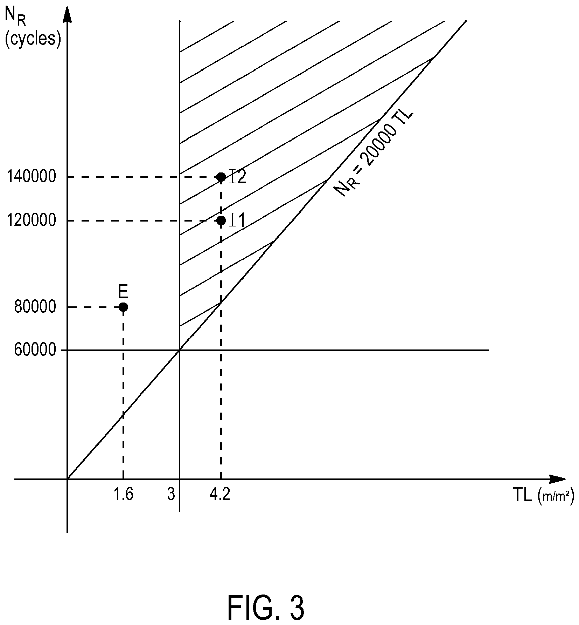

La figure 3 représente le domaine des nombres de cycles à rupture $N_R$ du mélange élastomérique de bande roulement en fonction du taux de lamellisation surfacique TL de la bande de roulement pour un pneumatique pour véhicule lourd de type génie civil selon l'invention. Selon l'invention, le taux de lamellisation surfacique TL de la bande de roulement est au moins égal à 3 m/m² et le nombre de cycles à rupture $N_R$ du mélange élastomérique de la bande de roulement est au moins égal à 60000 cycles avec un ratio C, rapport entre le nombre de cycles à rupture $N_R$ et le taux de lamellisation surfacique TL, au moins égal à 20000 cycles/(m/m²). Par conséquent, le domaine de l'invention, hachuré sur la figure 3, est délimité par les droites TL=3 m/m² et $N_R$=C*TL=20000*TL cycles/ (m/m²). Sur le graphique de la figure 3 est représenté un exemple de l'état de la technique E, en-dehors du domaine de l'invention, caractérisé par un taux de lamellisation surfacique TL égal à 1.6 m/m², donc inférieur à 3 m/m², et un nombre de cycles à rupture $N_R$ égal à 80000 cycles. Sont également représentés deux exemples de réalisation de l'invention I1 et I2, pour lesquels lequel le taux de lamellisation surfacique TL est égal à 4.2 m/m², et ayant respectivement un nombre de cycles à rupture $N_R$ égal 120000 cycles et à 140000 cycles.

L'invention a plus particulièrement été étudiée pour un pneumatique de dimension 40.00R57. Deux exemples de pneumatique selon l'invention I1 et I2 et un pneumatique de l'état de la technique E, pris en référence, ont été comparés par les inventeurs.

Les caractéristiques respectivement de lamellisation et du mélange élastomérique de la bande de roulement du pneumatique E et des pneumatiques I1 et I2 sont présentées dans le tableau 1 ci-dessous :

Tableau 1

| Dimension du pneumatique | E (40.00R57) | I1 (40.00R57) | I2 (40.00R57) |
|---|---|---|---|
| Taux de lamellisation surfacique TL | 1.6m/m² | 4.2 m/m² | 4.2 m/m² |
| Matrice élastomérique | polyisoprène | polyisoprène | polyisoprène |
| Taux de charge renforçante | -Noir de carbone : 40 pce<br>-Silice : 15 pce | -Noir de carbone : 42 pce<br>-Silice : 15 pce | -Noir de carbone : 35 pce<br>-Silice : 10 pce |
| Module de cisaillement dynamique G* | 1.4 MPa | 1.4 MPa | 1.2 MPa |
| Perte dynamique tgδ | 0.14 | 0.14 | 0.07 |
| Note de dispersion Z de la charge renforçante | 55 | 75 | 65 |
| Nombre de cycles à rupture $N_R$ | 80000 cycles | 120000 cycles | 140000 cycles |
| Ratio C=$N_R$/TL | 50000 cycles/ (m/m²) | 28571 cycles/ (m/m²) | 33333 cycles/ (m/m²) |

Selon le tableau 1, les trois pneumatiques comparés E, I1 et I2 ont une bande de roulement constituée par un mélange élastomérique unique dont la matrice élastomérique est un polyisoprène, c'est-à-dire un caoutchouc naturel, et dont la charge renforçante comprend à la fois un noir de carbone et une charge inorganique de type silice. Le pneumatique E de l'état de la technique n'entre pas dans le cadre de l'invention puisque qu'il ne satisfait pas le critère de taux de lamellisation surfacique TL minimal au moins égal à 3 m/m², c'est-à-dire de bande roulement suffisamment découpée. En revanche, le taux de lamellisation surfacique TL des pneumatiques I1 et I2 est égal à 4.2 m/m² et satisfait donc ce critère. Le mélange élastomérique de la bande roulement du pneumatique I1 est à la fois plus rigide et plus hystérique que celui du pneumatique I2. Par ailleurs la charge renforçante pour le pneumatique I1 est mieux dispersée que pour le pneumatique I2. Toutefois, le nombre de cycles à rupture NR étant plus faible pour le pneumatique I1 que pour le pneumatique I2, à iso taux de lamellisation TL, le ratio C est plus faible pour que le pneumatique I1 que pour le pneumatique I2. Par conséquent, le pneumatique I2 est plus performant que le pneumatique I1 vis-à-vis de la résistance aux agressions.

**Revendications**

1.  Pneumatique (1) pour véhicule lourd de type génie civil comprenant :

    - une bande de roulement (2) ayant une épaisseur radiale $H_T$ au moins égale à 60 mm et une largeur axiale $W_T$,
    - la bande de roulement (2) comprenant des découpures (21), ayant une largeur $W_D$ et une profondeur radiale $H_D$, et des éléments en relief (22), séparés les uns des autres par les découpures (21),
    - les découpures (21), dont la largeur $W_D$ est au plus égale à 20% de leur profondeur radiale $H_D$ et dont la profondeur radiale $H_D$ est au moins égale à 50% de l'épaisseur radiale $H_T$ de la bande de roulement (2), dites découpures efficaces, ayant une longueur cumulée $L_D$, mesurée sur une surface radialement extérieure (23) de la bande roulement (2),
    - les découpures efficaces étant des découpures de type rainures, permettant une circulation d'air dans la bande de roulement, et non des incisions,
    - la bande de roulement (2) ayant un taux de lamellisation surfacique TL, exprimé en $m/m^2$, égal au rapport entre la longueur cumulée $L_D$ des découpures efficaces (21) et l'aire A de la surface radialement extérieure (23) de la bande de roulement (2) égale à $2\Pi R_E * W_T$, où $R_E$ est le rayon extérieur du pneumatique,
    - la bande de roulement (2) comprenant, au moins au niveau des fonds (24) des découpures (21), un mélange élastomérique (3) ayant une résistance à la rupture en fissuration définie par un nombre de cycles à rupture $N_R$ et mesurée selon le protocole décrit dans les normes ASTM D4482-85 et ISO 6943,

    **caractérisé en ce que** le taux de lamellisation surfacique TL de la bande de roulement (2) est au moins égal à 3 $m/m^2$, **en ce que** le nombre de cycles à rupture $N_R$ du mélange élastomérique (3) de la bande de roulement (2) est au moins égal à 60000 cycles **et en ce que** le ratio C, rapport entre le nombre de cycles à rupture $N_R$ du mélange élastomérique (3) de la bande de roulement (2) et le taux de lamellisation surfacique TL de la bande de roulement (2), est au moins égal à 20000 cycles/$(m/m^2)$.

2.  Pneumatique (1) pour véhicule lourd de type génie civil selon la revendication 1, **dans lequel** le ratio C est au moins égal à 40000 cycles/$(m/m^2)$.

3.  Pneumatique (1) pour véhicule lourd de type génie civil selon l'une des revendications 1 ou 2, **dans lequel** le taux de lamellisation TL de la bande de roulement (2) est au moins égal à 3.5 $m/m^2$.

4.  Pneumatique (1) pour véhicule lourd de type génie civil selon l'une quelconque des revendications 1 à 3, **dans lequel** le taux de lamellisation TL de la bande de roulement (2) est au plus égal à 9 $m/m^2$.

5.  Pneumatique (1) pour véhicule lourd de type génie civil selon l'une quelconque des revendications 1 à 4, **dans lequel** le nombre de cycles à rupture $N_R$ du mélange élastomérique (3) de la bande de roulement (2) est au moins égal à 120000 cycles.

6.  Pneumatique (1) pour véhicule lourd de type génie civil selon l'une quelconque des revendications 1 à 5, **dans lequel** le mélange élastomérique (3) de la bande de roulement (2) a un module de cisaillement dynamique G* au moins égal à 1.0 MPa, le module de cisaillement dynamique G* étant mesuré selon la norme ASTM D 5992-96, pour une fréquence égale à 10 Hz et une température égale à 100°C.

7.  Pneumatique (1) pour véhicule lourd de type génie civil selon l'une quelconque des revendications 1 à 6, **dans lequel** le mélange élastomérique (3) de la bande de roulement (2) a une perte dynamique tg$\delta$ au plus égal à 0.2, la perte dynamique étant mesurée selon la norme ASTM D 5992-96, pour une fréquence égale à 10 Hz et une température égale à 100°C.

8.  Pneumatique (1) pour véhicule lourd de type génie civil selon l'une quelconque des revendications 1 à 7, **dans lequel** le mélange élastomérique (3) de la bande de roulement (2) comprend une matrice élastomérique constituée par un polyisoprène naturel.

9. Pneumatique (1) pour véhicule lourd de type génie civil selon l'une quelconque des revendications 1 à 8, **dans lequel** le mélange élastomérique (3) de la bande de roulement (2) comprend une charge renforçante dont le taux est au moins égal à 25 pce (parties pour cent parties d'élastomère) et au plus égal à 80 pce.

10. Pneumatique (1) pour véhicule lourd de type génie civil selon la revendication 9, **dans lequel** la charge renforçante du mélange élastomérique (3) de la bande de roulement (2) comprend un noir de carbone dont le taux est au moins égal à 25 pce et au plus égal à 60 pce.

11. Pneumatique (1) pour véhicule lourd de type génie civil selon l'une des revendications 9 ou 10, **dans lequel** la charge renforçante du mélange élastomérique (3) de la bande de roulement (2) comprend une charge inorganique, de préférence une silice, dont le taux est au plus égal à 25 pce.

12. Pneumatique (1) pour véhicule lourd de type génie civil selon l'une quelconque des revendications 9 à 11, la charge renforçante du mélange élastomérique (3) de la bande de roulement (2) ayant une note de dispersion Z, **dans lequel** la note de dispersion Z de la charge renforçante du mélange élastomérique de la bande de roulement (2) est au moins égale à 65, la note de dispersion Z étant mesurée, après réticulation du mélange élastomérique, selon la méthode décrite par S. Otto et Al dans Kautschuk Gummi Kunststoffe, 58 Jahrgang, NR 7-8/2005, en accord avec la norme ISO 1 1345.

13. Pneumatique (1) pour véhicule lourd de type génie civil selon l'une quelconque des revendications 1 à 12, **dans lequel** la bande de roulement (2) est constituée par un mélange élastomérique unique.

14. Pneumatique (1) pour véhicule lourd de type génie civil selon l'une quelconque des revendications 1 à 13, l'ensemble des découpures (21) ayant un volume total $V_D$ et l'ensemble des éléments en relief (22) ayant un volume total $V_R$, la bande de roulement (2) ayant un taux d'entaillement volumique TEV, exprimé en %, égal au rapport entre le volume total $V_D$ des découpures (21) et la somme du volume total $V_D$ des découpures (21) et du volume total des éléments en relief (22) **dans lequel** le taux d'entaillement volumique TEV de la bande de roulement (2) est au moins égal à 12%, de préférence au moins égal à 14%.


**Patentansprüche**

1. Reifen (1) für ein Tiefbau-Schwerlastfahrzeug, umfassend:

   - einen Laufstreifen (2) mit einer radialen Dicke $H_T$, die mindestens gleich 60 mm ist, und einer axialen Breite $W_T$,
   - wobei der Laufstreifen (2) Ausschnitte (21) mit einer Breite $W_D$ und einer radialen Tiefe $H_D$ und Reliefelemente (22), die durch die Ausschnitte (21) voneinander getrennt sind, umfasst,
   - wobei die Ausschnitte (21), deren Breite $W_D$ höchstens gleich 20 % ihrer radialen Tiefe $H_D$ ist, und deren radiale Tiefe $H_D$ mindestens gleich 50 % der radialen Dicke $H_T$ des Laufstreifens (2) ist, wirksame Ausschnitte genannt, eine kumulierte Länge $L_D$ aufweisen, die auf einer radial äußeren Oberfläche (23) des Laufstreifens (2) gemessen wird,
   - wobei die wirksamen Ausschnitte rillenartige Ausschnitte sind, die eine Luftzirkulation im Laufstreifen gestatten, und keine Einschnitte,
   - wobei der Laufstreifen (2) eine Oberflächenlamellisierungsrate TL aufweist, die in m/m² ausgedrückt ist, die gleich dem Verhältnis zwischen der kumulierten Länge $L_D$ der wirksamen Ausschnitte (21) und der Fläche A der radial äußeren Oberfläche (23) des Laufstreifens (2) ist, die gleich $2\Pi R_E * W_T$ ist, wobei $R_E$ der Außenradius des Reifens ist,
   - wobei der Laufstreifen (2) mindestens eine Ebene der Böden (24) der Ausschnitte (21) umfasst, wobei eine Elastomermischung (3) eine Rissbildungs-Reißfestigkeit aufweist, die durch eine Anzahl von Zyklen bei Bruch $N_R$ festgelegt ist und nach dem Protokoll gemessen wird, das in den Normen ASTM D4482-85 und ISO 6943 beschrieben ist, **dadurch gekennzeichnet, dass** die Oberflächenlamellisierungsrate TL des Laufstreifens (2) mindestens gleich 3 m/m² ist, dadurch, dass die Anzahl von Zyklen bei Bruch $N_R$ der Elastomermischung (3) des Laufstreifens (2) mindestens gleich 60000 Zyklen ist, und dadurch, dass der Quotient C, das Verhältnis zwischen der Anzahl von Zyklen bei Bruch $N_R$ der Elastomermischung (3) des Laufstreifens (2) und der Oberflächenlamellisierungsrate TL des Laufstreifens (2), mindestens gleich 20000 Zyklen/(m/m²) ist.

**2.** Reifen (1) für ein Tiefbau-Schwerlastfahrzeug nach Anspruch 1, wobei der Quotient C mindestens gleich 40000 Zyklen/ (m/m²) ist.

**3.** Reifen (1) für ein Tiefbau-Schwerlastfahrzeug nach einem der Ansprüche 1 oder 2, wobei die Lamellisierungsrate TL des Laufstreifens (2) mindestens gleich 3,5 m/m² ist.

**4.** Reifen (1) für ein Tiefbau-Schwerlastfahrzeug nach einem der Ansprüche 1 bis 3, wobei die Lamellisierungsrate TL des Laufstreifens (2) höchstens gleich 9 m/m² ist.

**5.** Reifen (1) für ein Tiefbau-Schwerlastfahrzeug nach einem der Ansprüche 1 bis 4, wobei die Anzahl von Zyklen bei Bruch $N_R$ der Elastomermischung (3) des Laufstreifens (2) mindestens gleich 120000 Zyklen ist.

**6.** Reifen (1) für ein Tiefbau-Schwerlastfahrzeug nach einem der Ansprüche 1 bis 5, wobei die Elastomermischung (3) des Laufstreifens (2) einen dynamischen Schermodul G* aufweist, der mindestens gleich 1,0 MPa ist, wobei der dynamische Schermodul G* nach der Norm ASTM D 5992-96 für eine Frequenz gleich 10 Hz und eine Temperatur gleich 100 °C gemessen wird.

**7.** Reifen (1) für ein Tiefbau-Schwerlastfahrzeug nach einem der Ansprüche 1 bis 6, wobei die Elastomermischung (3) des Laufstreifens (2) einen dynamischen Verlust tgδ aufweist, der höchstens gleich 0,2 ist, wobei der dynamische Verlust nach der Norm ASTM D 5992-96 für eine Frequenz gleich 10 Hz und eine Temperatur gleich 100 °C gemessen wird.

**8.** Reifen (1) für ein Tiefbau-Schwerlastfahrzeug nach einem der Ansprüche 1 bis 7, wobei die Elastomermischung (3) des Laufstreifens (2) eine Elastomermatrix umfasst, die von einem natürlichen Polyisopren gebildet ist.

**9.** Reifen (1) für ein Tiefbau-Schwerlastfahrzeug nach einem der Ansprüche 1 bis 8, wobei die Elastomermischung (3) des Laufstreifens (2) einen verstärkenden Füllstoff umfasst, dessen Anteil mindestens gleich 25 pce (Anteile pro hundert Anteile Elastomer) und höchstens gleich 80 pce ist.

**10.** Reifen (1) für ein Tiefbau-Schwerlastfahrzeug nach Anspruch 9, wobei der verstärkende Füllstoff der Elastomermischung (3) des Laufstreifens (2) ein Ruß umfasst, dessen Anteil mindestens gleich 25 pce und höchstens gleich 60 pce ist.

**11.** Reifen (1) für ein Tiefbau-Schwerlastfahrzeug nach einem der Ansprüche 9 oder 10, wobei der verstärkende Füllstoff der Elastomermischung (3) des Laufstreifens (2) einen anorganischen Füllstoff umfasst, vorzugsweise ein Siliziumdioxid, dessen Anteil höchstens gleich 25 pce ist.

**12.** Reifen (1) für ein Tiefbau-Schwerlastfahrzeug nach einem der Ansprüche 9 bis 11, wobei der verstärkende Füllstoff der Elastomermischung (3) des Laufstreifens (2) einen Dispersionswert Z aufweist, wobei der Dispersionswert Z des verstärkenden Füllstoffs der Elastomermischung des Laufstreifens (2) mindestens gleich 65 ist, wobei der Dispersionswert Z nach Vernetzung der Elastomermischung nach dem Verfahren, das von S. Otto et Al in Kautschuk Gummi Kunststoffe, 58 Jahrgang, NR 7-8/2005, beschrieben ist, entsprechend der Norm ISO 1 1345 gemessen wird.

**13.** Reifen (1) für ein Tiefbau-Schwerlastfahrzeug nach einem der Ansprüche 1 bis 12, wobei der Laufstreifen (2) von einer einzelnen Elastomermischung gebildet ist.

**14.** Reifen (1) für ein Tiefbau-Schwerlastfahrzeug nach einem der Ansprüche 1 bis 13, wobei die Gesamtheit der Ausschnitte (21) ein Gesamtvolumen $V_D$ und die Gesamtheit der Reliefelemente (22) ein Gesamtvolumen $V_R$ aufweist, wobei der Laufstreifen (2) eine Volumeneinkerbungsrate TEV aufweist, die in % ausgedrückt ist, die gleich dem Verhältnis zwischen dem Gesamtvolumen $V_D$ der Ausschnitte (21) und der Summe des Gesamtvolumens $V_D$ der Ausschnitte (21) und des Gesamtvolumens der Reliefelemente (22) ist, wobei die Volumeneinkerbungsrate TEV des Laufstreifens (2) mindestens gleich 12 %, vorzugsweise mindestens gleich 14 % ist.

**Claims**

**1.** Tyre (1) for a heavy vehicle of construction plant type, comprising:

- a tread (2) having a radial thickness $H_T$ at least equal to 60 mm and an axial width $W_T$,
- the tread (2) comprising cuts (21) having a width $W_D$ and a radial depth $H_D$, and elements in relief (22) that are separated from one another by the cuts (21),
- the cuts (21), the width $W_D$ of which is at most equal to 20% of their radial depth $H_D$ and the radial depth $H_D$ of which is at least equal to 50% of the radial thickness $H_T$ of the tread (2), referred to as effective cuts, having a cumulative length $L_D$ measured on a radially outer surface (23) of the tread (2),
- the effective cuts being groove type cuts, allowing air circulation in the tread, and not incisions,
- the tread (2) having a degree of surface siping TL, expressed in $m/m^2$, equal to the ratio between the cumulative length $L_D$ of the effective cuts (21) and the area A of the radially outer surface (23) of the tread (2) equal to $2\Pi R_E{*}W_T$, where $R_E$ is the external radius of the tyre,
- the tread (2) comprising, at least at the bottoms (24) of the cuts (21), an elastomeric compound (3) having a crack resistance defined by a number of cycles to failure $N_R$, and measured according to the protocol described in standards ASTM D4482-85 and ISO 6943, **characterized in that** the degree of surface siping TL of the tread (2) is at least equal to 3 $m/m^2$, **in that** the number of cycles to failure $N_R$ of the elastomeric compound (3) of the tread (2) is at least equal to 60000 cycles **and in that** the ratio C between the number of cycles to failure $N_R$ of the elastomeric compound (3) of the tread (2) and the degree of surface siping TL of the tread (2) is at least equal to 20000 cycles/$(m/m^2)$.

2. Tyre (1) for a heavy vehicle of construction plant type according to Claim 1, **wherein** the ratio C is at least equal to 40000 cycles/$(m/m^2)$.

3. Tyre (1) for a heavy vehicle of construction plant type according to either of Claims 1 and 2, **wherein** the degree of siping TL of the tread (2) is at least equal to 3.5 $m/m^2$.

4. Tyre (1) for a heavy vehicle of construction plant type according to any one of Claims 1 to 3, **wherein** the degree of siping TL of the tread (2) is at most equal to 9 $m/m^2$.

5. Tyre (1) for a heavy vehicle of construction plant type according to any one of Claims 1 to 4, **wherein** the number of cycles to failure $N_R$ of the elastomeric compound (3) of the tread (2) is at least equal to 120000 cycles.

6. Tyre (1) for a heavy vehicle of construction plant type according to any one of Claims 1 to 5, **wherein** the elastomeric compound (3) of the tread (2) has a dynamic shear module G* at least equal to 1.0 MPa, the dynamic shear modulus G* being measured according to standard ASTM D 5992-96, for a frequency equal to 10 Hz and a temperature equal to 100 ° C.

7. Tyre (1) for a heavy vehicle of construction plant type according to any one of Claims 1 to 6, **wherein** the elastomeric compound (3) of the tread (2) has a dynamic loss tg$\delta$ at most equal to 0.2, the dynamic loss being measured according to standard ASTM 5992-96, for a frequency at 10 Hz and a temperature equal to 100 ° C.

8. Tyre (1) for a heavy vehicle of construction plant type according to any one of Claims 1 to 7, **wherein** the elastomeric compound (3) of the tread (2) comprises an elastomeric matrix consisting of a natural polyisoprene.

9. Tyre (1) for a heavy vehicle of construction plant type according to any one of Claims 1 to 8, **wherein** the elastomeric compound (3) of the tread (2) comprises a reinforcing filler, the content of which is at least equal to 25 phr (parts per hundred parts of elastomer) and at most equal to 80 phr.

10. Tyre (1) for a heavy vehicle of construction plant type according to Claim 2, **wherein** the reinforcing filler of the elastomeric compound (3) of the tread (2) comprises a carbon black, the content of which is at least equal to 25 phr and at most equal to 60 phr.

11. Tyre (1) for a heavy vehicle of construction plant type according to either of Claims 9 and 10, **wherein** the reinforcing filler of the elastomeric compound (3) of the tread (2) comprises an inorganic filler, preferably a silica, the content of which is at most equal to 25 phr.

12. Tyre (1) for a heavy vehicle of construction plant type according to any one of Claims 9 to 11, the reinforcing filler of the elastomeric compound (3) of the tread (2) having a dispersion coefficient Z, **wherein** the dispersion coefficient Z of the reinforcing filler of the elastomeric compound of the tread (2) is at least equal to 65, the dispersion score Z being measured, after crosslinking of the elastomeric mixture, according to the method described by S. Otto, and

AI in Kautschuk Gummi Kunststoffe, 58 Jargang, NR 7-8 / 2005, in accordance with the ISO 11345 standard.

13. Tyre (1) for a heavy vehicle of construction plant type according to any one of Claims 1 to 12, **wherein** the tread (2) is made up of a single elastomeric compound.

14. Tyre (1) for a heavy vehicle of construction plant type according to any one of Claims 1 to 13, the set of cuts (21) having a total volume $V_D$ and the set of elements in relief (22) having a total volume $V_R$, the tread (2) having a volumetric void ratio TEV, expressed in %, equal to the ratio between the total volume $V_D$ of the cuts (21) and the sum of the total volume $V_D$ of the cuts (21) and the total volume of the elements in relief (22), **wherein** the volumetric void ratio TEV of the tread (2) is at least equal to 12%, preferably at least equal to 14%.

FIG. 1

FIG. 2A

FIG. 2B

FIG. 2C

FIG. 3

**EP 3 523 140 B1**

## RÉFÉRENCES CITÉES DANS LA DESCRIPTION

### Documents brevets cités dans la description

- WO 2013014253 A